# EUROPÄISCHE PATENTSCHRIFT

(11) **EP 3 557 172 B1**
(45) Veröffentlichungstag und Bekanntmachung des Hinweises auf die Patenterteilung: **14.10.2020**
(21) Anmeldenummer: 18167529.9
(22) Anmeldetag: 16.04.2018
(51) Int. Cl.: F27B 17/02, A61C 13/08

(54) **DENTALOFEN**
DENTAL OVEN
FOUR DENTAIRE

(43) Veröffentlichungstag der Anmeldung: 23.10.2019
(73) Patentinhaber: Ivoclar Vivadent AG, 9494 Schaan (LI)
(72) Erfinder: Schlegel, Manuel, 8887 Mels (CH); Jussel, Rudolf, 6800 Feldkirch (AT)
(74) Vertreter: Baronetzky, Klaus

(56) Entgegenhaltungen:
- EP-A1- 2 098 189
- DE-A1- 19 746 872
- KR-B1- 101 848 316

## Beschreibung

Die Erfindung betrifft einen Dentalofen, gemäß Anspruch 1. Typischerweise werden Dentalrestaurationstelle unter Wärmebehandlung hergestellt. Für die Erwärmung der Dentalrestaurationsteile dienen Dentälöfen, die einen Brennraum aufweisen, in dem häufig auch mehrere Dentalrestaurationstelle zur gleichen Zeit gebrannt werden können.

Die Dentalrestaurationsteile bestehen häufig aus speziellen Dentalkeramiken wie Lithiumdisillikat oder Zikondioxid und bedürfen einer besonderen Brennkurve, damit die erwünschten Eigenschaften bereitgestellt werden können.

Um ein gutes Brennergebnis zu erzielen, ist es bei derartigen Öfen erforderlich, ein genaues Temperaturprofil einzuhalten.

Vor nicht allzu langer Zelt waren hierfür Zykluszelten von mehreren Stunden, beispielsweise acht Stunden, erforderlich.

In neuerer Zeit sind Versuche unternommen worden, die Zykluszeit deutlich zu reduzieren. Hierzu hat man eine größere Aufheizrate und eine größere Abkühlrate verwendet. Beides ist aufgrund der eingeleiteten Thermospannungen nicht unkritisch. Um eine größere Aufheizrate zu erzielen, ist es vorgeschlagen worden, das Volumen des Brennraum und damit die aufzuheizende Wärmekapazität zu reduzieren. Dem sind allerdings Grenzen gesetzt bei Verwendung großer Dentalrestaurationsteile.

Zudem ist es effizienter, im Falle mehrerer zu erzeugender Dentalrestaurationsteile einen Brennofen mit einem Brennraum zu verwenden als mehrere parallel.

Aufgrund der guten mechanischen und ästhetisch sehr befriedigenden Restaurationsergebnisse wird In neuerer Zelt gerne Zlrkondioxid als Werkstoff für dentale Restaurationen eingesetzt. Dieses erfordert Verarbeitungstemperaturen von bis zu 1600 Grad Celsius. Die für einen derartigen Ofen zu verwendenden Heizelemente müssen dementsprechend nicht nur bis 1600 Grad Celsius Temperatur fest sein, sondern auch deutlich darüber, beispielsweise bis 1800 Grad Celsius.

Als vergleichsweise günstiges Material für die Heizelemente hat sich Molybdändisilizid gezeigt.

Der Betrieb derartiger Heizelemente Ist aufgrund der bei Temperaturen oberhalb von 1600 Grad Celsius auftretenden Erweichung streng reglementiert.

Dies gilt auch für die Art des Einbaus und die Abstützung der Heizelemente.

In umfangreichen Versuchsreihen, die vorgenommen worden, um die Verwendung von Heizelementen auch knapp unterhalb Ihrer Schmelztemperatur zu.ermöglichen, hat es sich als zwingend herausgestellt, die Heizelemente entweder abzustützen oder zumindest, in dem erweichten Zustand, nicht auf Biegung zu beanspruchen
Die führenden Hersteller derartige Molybdändisilizid-Heizelemente stellen derartige Halteelemente in verschiedenen Formen her. Es werden beispielsweise bogenförmige Heizelemente empfohlen, die hängend angebracht werden sollen, so dass lediglich Zugkräfte, aber keine Biegekräfte entstehen. Alternativ können auch seitliche Abstützungen verwendet werden, um, insofern das Auftreten von Biegebelastungen zu verhindern.

Seitliche Abstützungen haben jedoch den Nachteil, dass dann stets eine mechanische Beanspruchung des Heizelements vorliegt. Es lässt sich nicht vermeiden, dass eine Relativbewegung zwischen der Abstützung und dem Heizelement auftritt. Diese führt dann zu Reibung und insofern mechanischen Beeinträchtigung des Heizelements. Molybdändisilizid erleidet durch den Hochtemperatur-Betrieb eine Degradation.

Eine Oxidschicht (SiO2) bildet sich, welche abplatzen kann, wodurch dann das ursprüngliche Molybdändisilizid freigelegt wird. Die Oxidschicht ist überlebenswichtig fürs Heizelement und nach dem Abplatzen muss ein neuer Schichtaufbau mit einer hochtemperaturfesten SiO2-Oberfläche erfolgen.

Dieser Mechanismus wird durch eine seitliche Anlage gestört.

Ein Dentalofen ohne seitliche Abstützung der Heizelemente ist beispielsweise aus der EP 2 098 189 A1 bekannt. Bei diesem erstrecken sich die Heizelemente waagerecht oder hängend in der Heizkammer und weisen jeweils einen Halbkreisbogen auf, der nicht seitlich abgestützt ist.

Es ist auch vorgeschlagen worden, ausgesprochen kurze Heizelemente zu verwenden, die beispielsweise lediglich 3 cm lang sind und dadurch mechanisch stabiler, in Hinblick auf die Abstützung an den Anschlüssen. Diese Lösung hat sich jedoch als nicht praktikabel erwiesen, da aufgrund der kleinen Oberfläche der Heizelemente die Oberflächenlast der Heizelemente dann zu hoch wird.

Zwar könnte man die Anschlüsse stark kühlen, um sie auf einer Temperatur von beispielsweise 150 Grad oder darunter zu halten. Dies wäre jedoch energetisch extrem ungünstig und ist zudem in der Vakuumkammer schwierig und teuer zu realisieren.

Demgegenüber liegt der Erfindung die Aufgabe zugrunde, einen Dentalofen zu schaffen, der hinsichtlich der Energieeffizienz gerade auch im Hochtemperaturbereich deutlich verbessert Ist.

Diese Aufgabe wird erfindungsgemäß durch einen Gegenstand nach dem Anspruch 1 gelöst. Vorteilhafte Weiterbildungen ergeben sich aus den Unteransprüchen, Erfindungsgemäß ist es vorgesehen, entgegen den Empfehlungen der Hersteller Heizelemente als stehende Elemente zu realisieren, und zwar abgestützt auf Heizelement-Stützfüßen. Die Heizelement-Stützfüße können dann mit einem großen Temperaturgradienten betrieben werden, so dass die Anschlüsse auf einer niedrigen Temperatur liegen und die oberen Ende der Stützfüße auf einer hohen Temperatur, die der des Heizelement gleichkommt.

Die Heizelemente sind als elektrische Widerstands-Heizelemente ausgebildet und sind unterhalb des Brennraums je mittels mindestens eines Heizelement-Stützfußes abgestützt.

Die Heizelemente selbst können dann bogenförmig realisiert sein, wie es bei hängenden Heizelementen an sich bekannt ist. Sie sind frei von einer seitlichen Abstützung.

Mit der erfindungsgemäßen Lösung lässt sich die Kühlung der Anschlüsse und damit die Energievernichtung insofern vollständig vermeiden. Ferner lassen sich auch die Probleme mit obenliegenden Anschlüssen vermeiden. Bislang mussten Leitungen, die für die Durchleitung von z.b. 100 Ampere oder gar mehreren 100 Ampere geeignet sein sollten, zu den oben liegenden Anschlüssen von hängenden Heizelementen geführt werden. Selbst bei einem großen Leitungsquerschnitt entstanden durch die insofern langen Leitungen große Verluste, da die Leistungselektronik, die mit der Steuerelektronik eines Dentalofens in enger Verbindung steht, aufgrund der dort unten erwünschten Bedienelemente und aus thermischen Gründen im Fuß des Ofens angeordnet sein muss; eine oben angeordnete Leistungselektronik bedürfte einer Zusatzkühlung aufgrund der vom Brennraum aufstehe steigenden Wärme und würde den Ofen kopflastig machen, was technisch ungünstig ist.

Erfindungsgemäß ist es vorgesehen, die Heizelemente frei von einer seitlichen Abstützung zu realisieren. Dadurch ist gewährleistet, dass die, das Heizelement schützende Oxidschicht nicht zusätzlich mechanisch belastet und geschädigt wird gehen können.

Die Heizelement-Bögen können vergleichsweise kurz sein, was der mechanischen Stabilität zugutekommt. Im Hinblick auf die erfindungsgemäß besonderen Heizelement-Stützfüße kann eine Mehrzahl von Heizelementen in beliebiger geeigneter Weise um den Brennraum herum angeordnet sein. Im Gegensatz zur Lösung gemäß dem Stand der Technik führt dies nicht zu einer energetisch ungünstigen Lösung, da jedes Heizelement gezielt an der Stelle, an der es erforderlich ist, nämlich seitlich des Brennraum, Wärme abgeben kann.

Während die Realisierung des oberen Endes des Heizelement als Bogen bevorzugt ist, beispielsweise als elliptischer oder als Halbkreisbogen, ist es auch möglich, oben eine Schweißstelle anzuordnen, so dass ein Spitzbogen nach der Art eines gotischen Fensters entsteht. Die Schweißstelle hat zwar ein gewisses wenn auch kleines Zusatzgewicht, führt jedoch zur Aussteifung des Heizelement an dieser Stelle.

Die geometrischen Abmessungen sowohl des Heizelement als auch des Heizelement-Stützfußes lassen sich in weiten Bereichen an die Erfordernisse anpassen. Bei kompakten Dental-Öfen mit vergleichsweise kleinen Brennräumen kann beispielsweise eine Höhe der Heizelemente von 60 Millimetern, betrachtet vom Übergang zum Heizelement Stützfuß bis zum oberen Ende des Bogens, angestrebt werden. Der Heizelement-Stützfuß kann dann eine Länge von je beispielsweise 120mm aufweisen, so dass eine vergleichsweisegroße Höhe für die Bereitstellung des erwünschten Temperaturgradienten zur Verfügung steht.

Die Heizelemente erstrecken sich freitragend von in den Stützfüßen nach oben. Sollte eine Winkelabweichung von der Vertikalen entstehen, ist diese bevorzugt geringer als 5 Grad, so dass das Heizelement nicht zum Abkippen neigt.

Erfindungsgemäß ist es auch günstig, wenn die Heizelemente einen Durchmesser von mindestens 2 mm aufweisen.

In vorteilhaften Weiterbildung der Erfindung ist es vorgesehen, dass die Heizelement-Stützfüße über ihre Erstreckung von den elektrischen Anschlüssen zum Heizelementen einen Temperaturgradienten von insbesondere mehr als 50 Grad pro cm aufweisen.

In vorteilhaften Weiterbildung der Erfindung ist es vorgesehen,,dass die Heizelement-Stützfüße mindestens in ihrem anschlussnahen Bereich gekühlt sind, insbesondere durch Luft und oder mittels Kühlrippen oder durch ein beliebiges, insbesondere flüssiges, Wärmetauschermedium.

In vorteilhaften Weiterbildung der Erfindung ist es vorgesehen, dass der Dentalofen, insbesondere einschließlich der Heizelemente, unter Unterdruck setzbar ist.

In vorteilhafter Ausgestaltung der Erfindung ist es vorgesehen, dass die Heizelemente anschließend an die Heizelement-Stützfüße einen sich konisch verjüngenden Übergangsbereich aufweisen, der mindestens ein Zwanzigstel, insbesondere mindestens ein Zehntel der Erstreckung jedes Heizelements einnimmt.

Es versteht sich, dass der Übergangsbereich anstelledessen auch eine beliebige andere Form haben kann. Beispielsweise können die Heizelemente auf ein flaches oberes Ende der Stützfüße aufgebracht sein. Alternativ kann die Anbringung auch auf einem schrägen Ende oben an den Stützfüßen realisiert sein. Ferner ist es möglich, die Verbindung einstückig zu realisieren, oder aber per Schweißen.

in einer weiteren vorteilhaften Ausgestaltung der Erfindung ist es vorgesehen, dass die Querschnittsflächen von den Heizelemente-Stützfüßen über die Übergangsbereiche zu den Heizelementen monoton fallend, insbesondere streng monoton fallend, abnehmen.

In einer vorteilhaften Ausgestaltung der Erfindung ist es vorgesehen, dass die Stützfüße und die Heizelemente einschließlich deren Übergangsbereiche aus dem gleichen Material bestehen und unterschiedliche Querschnittsflächen aufweisen.

In einer besonderen Ausgestaltung der erfindungsgemäßen Lösungen ist der Dental-Ofen von oben beschickbar. Ein Beschickungsboden ist vertikal beweglich und der Ofen im übrigen weist einen vertikalen Kanal auf, durch den der Beschickungsboden von unten nach oben und zurück hindurch bewegbar ist. Die Heizelemente sind an in der mittleren Höhe dieses Kanals angeordnet und der Kanal ist oben mit einem Deckel verschließbar,

Gerade ein solcher Präsentationsofen ist erfindungsgemäß besonders günstig mit den erfindungsgemäßen Heizelementen mit Heizelement-Stützfüßen kombinierbar an, denn ein solcher Ofen ist besonders für einen vergleichsweise kleinen Brennraum geeignet, wobei aus unterschiedlichen Gründen die elektrischen Anschlüsse im Ofenfuß angeordnet sein müssen. Ein solcher Ofen ist besonders als chairside-Ofen in einer Dentalpraxis günstig.

Die erfindungsgemäßen Heizelemente können sich zusammen mit ihren je zugehörigen Stützfüßen ringförmig um den Brennraum erstrecken. Hier sind beliebige geometrische Anordnungen des Rings denkbar, beispielsweise auch Mehrecke oder auch asymmetrische Anordnungen.

Weitere Vorteile, Einzelheiten und Merkmale ergeben sich aus der nachfolgenden Beschreibung eines Ausführungsbeispiels der Erfindung anhand der Zeichnung.

Es zeigen:
- Fig. 1: eine schematische Ansicht einer Ausführungsform eines erfindungsgemäßen Dentalofens;
- Fig. 2: eine Seitenansicht eines erfindungsgemäßen Heizelement mit dem zugehörigen Stützfuß und eingezeichnetem Temperaturgradienten für eine erfindungsgemäßen Dentalofen;
- Fig. 3: eine schematische Ansicht einer weiteren Ausführungsform eines erfindungsgemäßen Heizelements mit Stützfuß; und
- Fig. 4A bis Fig. 4F: schematische Ansichten möglicher Anordnungen von Heizelementen um einen Brennraum in einem erfindungsgemäßen Dentalofen.

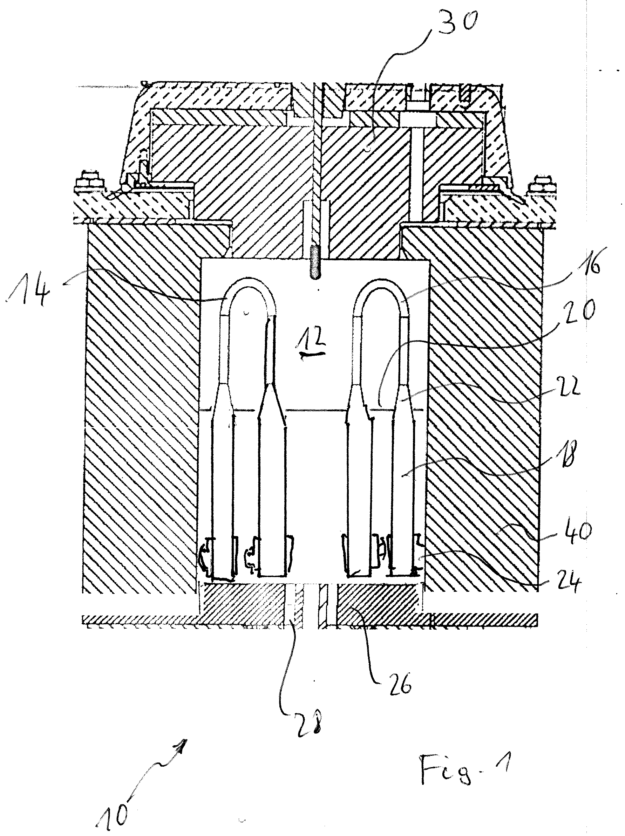

In der Ausführungsform gemäß Fig. 1 ist ein Dentalofen 10 vorgesehen. Dieser weist einen Brennraum 12 auf, der von einer Mehrzahl von Heizelementen umgeben ist. In Fig. 1 sind die beiden Heizelemente 14 und 16 dargestellt.

Die Heizelemente erstrecken sich über einen großen Teil der Höhe des Brennraum 12. Sie sind an Heizelement-Stützfüßen 18 abgestützt, wobei jedes Heizelement 14 sich oben nach der Art eines umgekehrten U erstreckt und auf zwei Stützfüßen 18 abgestützt ist.

Die Heizelement Stützfüße 18 durchtreten einen Brennraum-Boden 20. Sie erstrecken sich über eine erhebliche Höhe, die im Beispielsfall nahezu die doppelte Höhe der Höhe der Heizelemente 14 und 16 beträgt.

Die Heizelemente-Stützfüße 18 weisen zur Abstützung der Heizelemente 14 und 16 einen Übergangsbereich 22 Uhr auf. Dieser bietet die Möglichkeit, die Form des Querschnitts der Stützfüße 18 an die der Heizelemente 14 und 16 anzupassen. Im Beispielsfall ist je ein kreisförmiger Querschnitt vorgesehen und, und die Übergangsbereiche sind konisch oder kegelstumpfförmig.

Es versteht sich, dass anstelle dessen auch ein beliebiger anderer Querschnitt möglich ist.

Die Heizelement-Stützfüße 18 weisen an ihrem unteren Ende elektrische Anschlüsse 24 auf. Dort sind sie vergleichsweise kühl, beispielsweise etwa 200 Grad, und im Bereich des Bodens 26 des Ofens 10 sind Kühlluft-Öffnungen 28 vorgesehen, die die Anschlüsse 24 weiter kühlen.

Der Brennraum 12 ist oben mit einem Deckel 30 verschließbar. Der Brennraum-Boden 20 ist vertikal verfahrbar. Nach dem Anheben oder Wegschwenken des Deckels 30 kann der Brennraum-Boden 20 angehoben werden, durch die Deckelöffnung hindurch, so dass das dort gelagerte Brenngut, also beispielsweise Dentalrestaurationsteile, entnehmbar ist und der Ofen neu bestückbar ist.

In dem dargestellten Ausführungsbeispiel sind die Heizelemente 14 und 16 um den Umfang des Brennraum 12 angeordnet.

Außerhalb der Heizelemente 14 und der Heizelement-Stützfüße 18 ist eine Wärmedämmung 40 vorgesehen. Diese kann auch Nuten aufweisen, in denen die Heizelemente 14 und die Stützfüße 18 aufgenommen sind.

Auch können die Heizelemente 14 in an sich bekannter Weise mit einem temperaturfesten Schutzmaterial abgedeckt sein, um den Brennraum vor von den Heizelementen sich ablösenden Partikeln und/oder Gasen zu schützen.

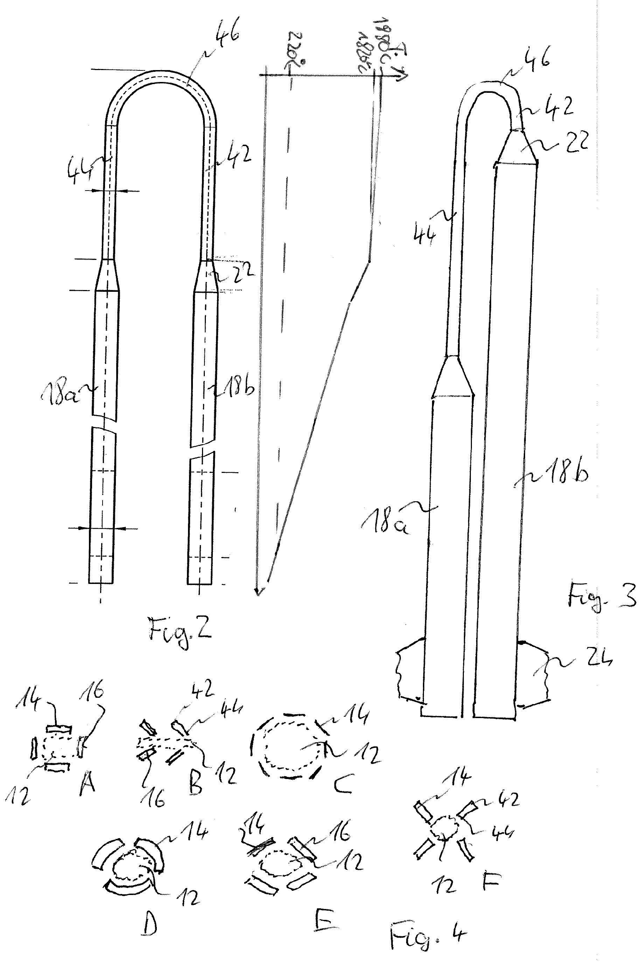

Eine Ausführungsform eines erfindungsgemäßen Heizelement 14 ist aus Fig. 2 ersichtlich. Das Heizelement 14 weist zwei Seitenschenkel 42 und 44 auf, die über einen Bogenschenkel 46 miteinander verbunden sind.

Der Seitenschenkel 44 ist über einen Übergangsbereich 22 mit dem Stützfuß 18a verbunden und auf diesem abgestützt, und der Seitenschenkel 42 über den Übergangsbereich 22 mit dem Stützfuß 18b.

Der Bogenschenkel 46 ist etwa gleich lang wie die Seitenschenkel 44 und 42. Dementsprechend weist er einen vergleichsweise großen Radius auf. Durch den elektrisch kürzeren Weg - und den daher geringeren Widerstand - wird die Innenseite des Bogenschenkels 46 vergleichsweise heiß.

Um dies zu kompensieren, ist in einer modifizierten Ausgestaltung des erfindungsgemäßen Heizelements ein hochovaler Querschnitt des Bogenschenkels 46 vorgesehen. Die Außenseite des Bogenschenkels 46 ist bei dieser Ausführungsform gleichsam verlängert und kühler, so dass im Grunde die Innenseite an der Außenseite aufgehängt ist.

Es versteht sich, dass sich der ovale Querschnitt beliebig auch in den Bereich der Seitenschenkel 42 und 44 fortsetzen kann.

Die Außenseite des Bogenschenkels 46 ist aufgrund Ihres gegenüber der Innenseite höheren elektrischen Widerstandes stets, also auch bei einem kresiförmigen Querschnitt, kühler als die Innenseite.

Erfindungsgemäß wird der heißeste Teil der Heizelements 14 stets von der kälteren Außenseite getragen. Insofern ist trotz stehender Anordnung der Heizelemente der heißeste Teil dieser gleichsam virtuell aufgehängt.

Der Bogen-Durchmesser des Bogenschenkels 46 beträgt etwa das Sechsfache des Durchmessers des Heizelements 14. Der Übergangsbereich 22 weist eine Höhe auf, die etwa dem dreifachen Durchmesser des Heizelement 14 entspricht.

Der Durchmesser des Stützfußes 18a und des Stützfußes 18b beträgt ebenfalls etwa das Dreifache des Durchmessers des Heizelement 14. Die Länge der Stützfüße 18 kann in beliebiger Weise an die Erfordernisse, also die räumlichen Abmessungen in dem Dentalofen, angepasst werden.

Jedenfalls sind unten die elektrischen Anschlüsse 24 vorgesehen. Diese weisen in an sich bekannter Weise Klemmschellen auf, die über Schraubverbindungen die unteren Bereiche in der Stützfüße 18 klemmend umschließen und durch die große Anlagefläche für eine geringe Stromdichte dort Sorge tragen.

Die Temperatur das Heizelement und der Stützfüße ist in Fig. 2 rechts schematisch dargestellt. Das Heizelement weist eine nach oben leicht zunehmende Temperatur auf, etwa 1800 Grad Celsius. Diese ist im Übergangsbereich 22 bereits deutlich geringer und sinkt zum unteren Ende der Stützfüße 18 auf Werte, die den Kontakt mit einem elektrischen Anschluss erlauben.

Eine weiter modifizierte Ausgestaltungen eines erfindungsgemäßen Heizelement 14 ist aus Fig. 3 ersichtlich. Bei dieser Ausführungsform ist der Stützfuß 18b wesentlich länger als der Stützfuß 18a und hierzu passend der Seitenschenkel 42 wesentlich kürzer als der Seitenschenkel 44.

Bei dieser Ausführungsform trägt die Kombination aus dem Bogenschenkel 46 und dem Seitenschenkel 42 gleichsam den Seitenschenkel 44, so dass eine virtuell hängende Ausgestaltung realisiert ist, trotz der physikalisch stehenden Realisierung.

Aus Fig. 4 sind verschiedene mögliche Relativanordnungen der Heizelemente zu dem Brennraum 12 ersichtlich. Diese sind lediglich beispielhaft zu verstehen.

Fig. 4A zeigt einen rechteckigen Brennraum 12, um den 4 Heizelemente 14 und 16 symmetrisch angeordnet sind. Der Brennraum 12 könnte bei dieser Ausführungsform auch kreisförmig oder mit abgerundeten Ecken ausgebildet sein.

Die in Fig. 4B dargestellte Ausführungsform weist 4 Heizelemente 14 und 16 auf, die sich um einen längsrechteckigen Brennraum 12 erstrecken. Bei dieser Schrägstellung der Heizelemente, wie sie aus Fig. 4B ersichtlich ist, ist es bevorzugt, den langen und heißen Seitenschenkel 44 der Heizelemente dem Brennraum 12 benachbart und den kühlen und kürzeren Seitenschenkel 42 entfernt von dem Brennraum 12 anzuordnen.

Aus Fig. 4C ist eine weitere Ausführungsform eines erfindungsgemäßen Dentalofens ersichtlich. Bei dieser Lösung sind 8 Heizelemente 14 im Achteck um den kreisförmigen oder achteckigen Brennraum 12 angeordnet.

Bei der Ausführungsform gemäß Fig. 4D ist jedes Heizelement 12 in der Draufsicht gebogen. Die Biegung wird durch eine entsprechende Ausgestaltung des Bogenschenkels 46 realisiert. Der Brennraum 12 ist hierdurch eng umschlossen und erstreckt sich elliptisch oder oval.

Eine rhombische Heizelement-Anordnung ist aus Fig. 4E ersichtlich. Bei dieser Lösung kann der Brennraum 12 beispielsweise trapezförmigen Querschnitt sein, oder auch oval sein.

Die Ausführungsform gemäß Fig. 4F eignet sich für die Verwendung der asymmetrischen Heizelemente gemäss Fig. 3. Die Heizelement-Anordnung ist dort sternförmig, beispielsweise mit vier Heizelementen. Hier sind wiederum die längeren Seitenschenkel 44 dem Brennraum 12 Uhr zugewandt und die kürzeren Seitenschenkel 42 vom Brennraum 12 abgewandt.

## Patentansprüche

1. Dentalofen, insbesondere Hochtemperatur-Dentalofen für Oxidkeramiken wie Zirkondioxid mit Sintertemperaturen zwischen 1350 und 1650 Grad Celsius, mit Heizelementen (14,16), die dafür bestimmt sind, Heizenergie an einen Brennraum (12) in dem Dentalofen (10) abzugeben, wobei die Heizelemente (14,16) als elektrische Widerstands-Heizelemente ausgebildet sind und unterhalb des Brennraums (12) je mittels mindestens eines Helzelement-Stützfußes (18) abgestützt sind, wobei die Heizelemente (14,16) von den Heizelement-Stützfüßen (18) ausgehend sich stehend nach oben erstrecken und oben in einem Bogen (46), insbesondere in einem Halbkreisbogen oder ggf. in einem Spitzbogen, enden, ohne obere seitliche Abstützung, insbesondere nicht im Bereich des Bogens (46).

2. Dentalofen nach Anspruch 1 **dadurch gekennzeichnet , dass** die Heizelemente (14,16) In der Draufsicht Im wesentlichen ringförmig und/oder ein Mehreck bildend um den Umfang des Brennraums (12) verteilt sind, insbesondere 3 bis 8, bevorzugt 4 Heizelemente.

3. Dentalofen nach einem der vorhergehenden Ansprüche, **dadurch gekennzeichnet, dass** die Heizelemente (14, 16) und insbesondere auch die Heizelement-Stützfüße (18) aus Molybdändisllicid bestehen oder dieses überwiegend aufweisen.

4. Dentalofen nach einem der vorhergehenden Ansprüche, **dadurch gekennzeichnet, dass** die Heizelemente (14,16) sich von den Heizelement-Stützfüßen (18) ausgehend über weniger als 10 cm, bevorzugt zwischen 3 cm und 8 cm, nach oben erstrecken.

5. Dentalofen nach einem der vorhergehenden Ansprüche, **dadurch gekennzeichnet, dass** der Brennraum (12) eine Höhe von höchstens 120 mm und einen Durchmesser oder eine Diagonale oder Seitenlänge von höchstens 100 mm aufweist, wobei die Heizelemente (14,16) sich seitlich neben dem Brennraum über die halbe bis die ganze Höhe erstrecken, bevorzugt über etwa 70 mm.

6. Dentalofen nach einem der vorhergehenden Ansprüche, **dadurch gekennzeichnet, dass** die Heizelemente (14,16) als Mittelschenkel des Us einen Halbkreisbogen (46) aufweisen, dessen Radius mindestens 10 mm und höchstens 5 cm beträgt und insbesondere mehr als das Dreifache deren Durchmesser.

7. Dentalofen nach einem der vorhergehenden Ansprüche, **dadurch gekennzeichnet, dass** die Enden der Heizelemente (14,16) und dementsprechend auch die zugehörigen oberen Enden der Heizelement-Stützfüße (18) in vertikaler Richtung höhenversetzt sind, so dass ein unteres Ende, insbesondere Schenkel (42), eines Heizelements höher zu liegen kommt als das andere untere Ende, insbesondere Schenkel (44).

8. Dentalofen nach Anspruch 7, **dadurch gekennzeichnet, dass** die Heizelemente (14,16) sternförmig angeordnet sind und sich mit dem tieferen Ende des Heizelements radial weiter innen und mit dem höheren radial welter außen erstrecken.

9. Dentalofen nach einem der vorhergehenden Ansprüche, **dadurch gekennzeichnet, dass** die Heizelemente-Stützfüße (18) und die Heizelemente (14,16) und insbesondere auch Übergangsbereiche (22) aus dem gleichen Material bestehen und unterschiedliche Querschnittsflächen aufweisen.

10. Dentalofen nach einem der vorhergehenden Ansprüche, **dadurch gekennzeichnet, dass** die Heizelemente-Stützfüße (18) und die Heizelemente in mehr als 2 Durchmesserabstufungen realisiert sind, wobei die Durchmesser von oben nach unten zunehmen.

11. Dentalofen nach einem der vorhergehenden Ansprüche, **dadurch gekennzeichnet, dass** die Leistungselektronik des Dentalofens (10) den elektrischen Anschlüssen (24) benachbart Im Fuß des Dentalofens angebracht ist.

12. Dentalofen nach einem der vorhergehenden Ansprüche, **dadurch gekennzeichnet, dass** der Dentalofen (10) einen Beschickungsboden, insbesondere Brennraumboden (20), aufweist, der sich, bezogen auf die Heizelemente (14,16), zur Beschickung mit Dentalrestaurationen von unten durch den Brennraum (12) hindurch nach oben in einen Bereich nahe der Oberseite des Dentalofens (10) bewegen lässt.

## Claims

1. A dental furnace, in particular a high-temperature dental furnace for oxide ceramics such as zirconium dioxide having sintering temperatures between 1350 and 1650 degrees Celsius, comprising heating elements (14, 16) which are adapted to deliver heating energy to a firing chamber (12) in the dental furnace (10), the heating elements (14, 16) being formed as electrical resistance heating elements, wherein each one being supported by at least one heating element support foot (18) below the firing chamber (12), heating elements (14, 16) extending upwards in an upright position from the heating element support feet (18) and at the top being arranged in an arc (46), in particular in a semicircular arc or, if appropriate, in a semicircle, without nay upper lateral support, in particular not in the region of the arc (46).

2. The dental furnace according to claim 1, **characterized, in that** the heating elements (14, 16), as seen in top view, are distributed around the circumference of the firing chamber (12), essentially in an annular manner and/or in a manner forming a polygon, in particular 3 to 8, preferably 4 heating elements.

3. The dental furnace according to one of the preceding claims, **characterized in that** the heating elements (14, 16) and in particular also the heating element support feet (18) consist of molybdenum silicide, or predominantly comprising it.

4. The dental furnace according to one of the preceding claims, **characterized in that** the heating elements (14, 16) extend upwards from the heating element support feet (18) by less than 10 cm, preferably between 3 cm and 8 cm.

5. The dental furnace according to one of the preceding claims, **characterized in that** the firing chamber (12) has a height of at most 120 mm, and has a diameter or a diagonal or side length of at most 100 mm, the heating elements (14, 16) extending laterally adjacent to the firing chamber across half of the height or the full height, preferably across about 70 mm.

6. The dental furnace according to one of the preceding claims, **characterized in that** the heating elements (14, 16), as the central leg of the Us, have a semicircular arc (46), the radius of which is at least 10 mm and at most 5 cm and in particular more than three times the diameter thereof.

7. The dental furnace according to one of the preceding claims, **characterized in that** the ends of the heating elements (14, 16) and correspondingly also the respectively associated upper ends of the heating element support feet (18) are vertically offset in height in the vertical direction, so that a lower end, in particular the leg (42) of a heating element is located higher than the other lower end, in particular leg (44).

8. The dental furnace according to claim 7, **characterized in that** the heating elements (14, 16) are arranged in a star shaped manner and extending radially further inwards with the lower end of the heating element and extending radially further outwards with the higher end.

9. The dental furnace according to one of the preceding claims, **characterized in that** the heating element support feet (18) and the heating elements (14, 16) and in particular also transition regions (22) consist of the same material and having different cross-sectional areas.

10. The dental furnace according to one of the preceding claims, **characterized in that** the heating element support feet (18) and the heating elements are realized in more than 2 diameter graduations, the diameters increasing from top to bottom.

11. The dental furnace according to one of the preceding claims, **characterized in that** the power electronics of the dental furnace (10) is mounted in the foot of the dental furnace adjacent to the electrical connections (24).

12. The dental furnace according to one of the preceding claims, **characterized in that** the dental furnace (10) has a charging floor T, in particular a firing chamber floor (20), which, with respect to the heating elements (14, 16), can upwardly be moved from below through the firing chamber (12) into a region near the top of the dental furnace (10) for charging with dental restorations.

## Revendications

1. Four dentaire, en particulier four dentaire à haute température pour des céramiques d'oxyde telles que le dioxyde de zirconium avec des températures de frittage comprises entre 1350 et 1650 degrés Celsius, avec des éléments chauffants (14, 16) qui sont destinés à fournir de l'énergie de chauffage à une chambre de combustion (12) dans le four dentaire (10), où les éléments chauffants sont conçus comme des éléments chauffants à résistance électrique (14, 16) et sont soutenus chacun sous la chambre de combustion (12) du four dentaire (10), 16) par au moins un pied de support d'élément chauffant (18), où les éléments chauffants (14, 16) s'étendent vers le haut en position verticale à partir des pieds de support des éléments chauffants (18) et se terminent en haut en arc (46), en particulier en arc de demi-cercle ou éventuellement en arc ogival, sans support latéral supérieur, en particulier dans la région de l'arc (46).

2. Four dentaire selon la revendication 1, **caractérisé en ce que** les éléments chauffants (14, 16) en vue de dessus sont répartis sur la circonférence de la chambre de combustion (12) essentiellement annulaire et/ou polygonale, en particulier entre 3 et 8, de préférence 4 éléments chauffants.

3. Four dentaire selon l'une des revendications précédentes, **caractérisé en ce que** les éléments chauffants (14, 16) et en particulier aussi les pieds de support (18) des éléments chauffants sont constitués complètement ou principalement de disiliciure de molybdène.

4. Four dentaire selon l'une des revendications précédentes, **caractérisé en ce que** les éléments chauffants (14, 16) s'étendent vers le haut à partir des pieds de support (18) des éléments chauffants sur moins de 10 cm, de préférence entre 3 cm et 8 cm.

5. Four dentaire selon l'une des revendications précédentes, **caractérisé en ce que** la chambre de combustion (12) a une hauteur maximale de 120 mm et un diamètre ou une longueur diagonale ou latérale maximale de 100 mm, où les éléments chauffants (14, 16) s'étendent latéralement à côté de la chambre de combustion sur la moitié et jusqu'à la totalité de la hauteur, de préférence sur environ 70 mm.

6. Four dentaire selon l'une des revendications précédentes, **caractérisé en ce que** les éléments chauffants (14, 16) présentent comme branche centrale de l'U un arc semi-circulaire (46) dont le rayon au moins 10 mm et 5 cm au maximum et en particulier supérieur à trois fois leur diamètre.

7. Four dentaire selon l'une des revendications précédentes, **caractérisé en ce que** les extrémités des éléments chauffants (14, 16) et, de manière correspondante, également les extrémités supérieures associées des pieds de support des éléments chauffants (18) sont décalées verticalement dans le sens vertical, de telle manière qu'une extrémité inférieure, en particulier une branche (42), d'un élément chauffant est positionnée plus haut que l'autre extrémité inférieure, en particulier une branche (44).

8. Four dentaire selon la revendication 7, **caractérisé en ce que** les éléments chauffants (14, 16) sont disposés en étoile et s'étendent avec l'extrémité inférieure de l'élément chauffant radialement plus vers l'intérieur et avec son extrémité supérieure radialement plus vers l'extérieur.

9. Four dentaire selon l'une des revendications précédentes, **caractérisé en ce que** les pieds de support (18) des éléments chauffants et les éléments chauffants (14, 16) et en particulier aussi les zones de transition (22) sont fabriqués à partir du même matériau et ont des sections transversales différentes.

10. Four dentaire selon l'une des revendications précédentes, **caractérisé en ce que** les pieds de support des éléments chauffants (18) et les éléments chauffants sont réalisés en plus de 2 gradations de diamètre, où les diamètres augmentent de haut en bas.

11. Four dentaire selon l'une des revendications précédentes, **caractérisé en ce que** l'électronique de puissance du four dentaire (10) est montée dans le pied du four dentaire à côté des connexions électriques (24).

12. Four dentaire selon l'une des revendications précédentes, **caractérisé en ce que** le four dentaire (10) présente un plancher de chargement, en particulier un plancher de chambre de combustion (20), qui, par rapport aux éléments chauffants (14, 16), peut être déplacé du bas vers le haut à travers la chambre de combustion (12) dans une zone proche du haut du four dentaire (10) pour le chargement de restaurations dentaires.
